# EUROPEAN PATENT APPLICATION

(11) **EP 0 957 104 A2**
(43) Date of publication of application: **17.11.1999**
(21) Application number: 99302981.8
(22) Date of filing: 16.04.1999
(51) Int. Cl.: C07F 7/14, C07F 7/08

(54) **Amine borane complexes and phosphine borane complexes as hydrosilation catalysts**

(30) Priority: 17.04.1998 US 62076
(71) Applicant: DOW CORNING CORPORATION, Midland Michigan 48686-0994 (US)
(72) Inventor: Tzou, Ming-Shin, Midland, Michigan 48640 (US); Sugiura, Yasushi, Ichihara-shi, Chiba Prefecture (JP)
(74) Representative: Hall, Marina

(57) **Abstract**

A hydrosilation method is disclosed and claimed which comprises contacting a silicon hydride with an unsaturated reactant in the presence of a catalyst selected from the group consisting of amine borane complexes or phosphine borane complexes. These catalysts are especially useful for selectively hydrosilating unsaturated organic compounds with an internal unsaturated bond to increase the hydrosilation product yield.

## Description

The present invention is a hydrosilation method comprising contacting a silicon hydride with an unsaturated reactant in the presence of a catalyst selected from the group consisting of amine borane complexes and phosphine borane complexes. These catalyst are especially useful for increasing selectivity for the hydrosilation of unsaturated reactants where the unsaturation is in an internal portion of the reactant's structure.

It is known in the art to produce organosilicon compounds by reacting a silicon hydride containing compound with an unsaturated organic compound in the presence of a catalyst. This reaction is generally referred to as hydrosilation or hydrosilylation. Typically, the catalyst is platinum metal on a support, a platinum compound generally in a solvent or a platinum complex.

U.S. Patent 2,823,218 discloses one such method for the production of organosilicon compounds by reacting an Si-H with a compound containing aliphatic carbon atoms linked by multiple bonds in the presence of chloroplatinic acid. Similarly, U.S. Patent 3,220,972 teaches the use of a catalyst which is a reaction product of chloroplatinic acid.

A major limitation of platinum as a hydrosilation catalyst is that it is not particularly effective for hydrosilating unsaturated organic compounds with an internal unsaturated bond. Platinum is also known to produce multiple hydrosilation products that are very difficult to separate. In addition, the result is often migration of the unsaturated bond, such that silyl group bonds to the terminal carbon atoms.

The present invention provides a method for hydrosilating unsaturated reactants for the preparation of organosilanes. We have unexpectedly found that catalysts selected from the group consisting of amine borane complexes or phosphine borane complexes are extremely useful for such hydrosilation reactions. More particularly, these catalysts selectively hydrosilate unsaturated organic compounds with internal unsaturated bonds to increase hydrosilation product yields.

The present invention is a hydrosilation method comprising contacting a silicon hydride with an unsaturated reactant in the presence of a catalyst selected from the group consisting of amine borane complexes and phosphineborane complexes. The catalysts are especially useful for selectively hydrosilating unsaturated organic compounds with an internal unsaturated bond to increase the desired hydrosilation product yield.

The present hydrosilation method comprises contacting
(A) a silicon hydride described by formula R¹ₐH_{b}SiX_{4-a-b} (1) where each R¹ is independently selected from alkyls of 1 to 20 carbon atoms, cycloalkyls comprising 4 to 12 carbon atoms and aryls; X is a halogen atom, a=0 to 3, and a + b=1 to 4; and
(B) an unsaturated reactant selected from the group consisting of
   (i) substituted or unsubstituted unsaturated organic compounds,
   (ii) silicon compounds comprising substituted or unsubstituted unsaturated organic substituents, and
   (iii) mixtures of (i) and (ii); in the presence of a catalyst selected from the group consisting of amine borane complexes described by formula R² ₃NBH₃ or phosphine borane complexes described by formula R² ₃PBH₃, where each R² is independently selected from the group consisting of alkyls comprising 1 to 10 carbon atoms, arylalkyls and aryls.

The contact of silicon hydride with unsaturated reactant is conveniently effected in standard type reactors for conducting hydrosilation processes. This contacting may be conducted as a continuous, semi-continuous or batch process.

Silicon hydrides useful in our method are described by formula (1) where each R¹ is independently selected from the group consisting of alkyls comprising 1 to 20 carbon atoms, cycloalkyls comprising 4 to 12 carbon atoms, arylalkyls such as C7 to 20 arylalkyls and aryls such as C6 to 20 aryls; a=0 to 3, b=1 to 3, and a+b=1 to 4. R¹ is, for example, a substituted or unsubstituted alkyl such as methyl, ethyl, propyl, butyl, pentyl, hexyl, neptyl, octyl, nonyl, decyl, undecyl and dodecyl; a cycloalkyl such as cyclopropy, cyclobutyl, cyclopentyl, cyclohexyl, cycloheptyl and cyclooctyl; an aryl such as phenyl, tolyl, naphthyl and benzyl, or an alkylaryl such as alkylphenyl and alkylnaphthyl. Preferred is when R¹ is methyl.

In formula (1), it is preferred that each R¹ be independently selected from alkyls comprising 1 to 6 carbon atoms. Even more preferred is when each R¹ is methyl. X is a halogen atom selected from chlorine, fluorine or bromine and most preferred is a chlorine atom.

Examples cf silicon hydrides described by formula (1) which are useful herein are trimethylsilane, dimethylsilane, triethylsilane, dichlorosilane, trichlorosilane, methyldichlorosilane, dimethylchlorosilane, ethyldichlorosilane, cyclopentyldichlorosilane, methylphenylchlorosilane, (3,3,3-trifluoropropyl)-dichlorosilane and methylchlorosilane. Examples of preferred silicon hydrides described by formula (1) include methyldichlorosilane, trichlorosilane and dichlorosilane.

The silicon hydride is first contacted with an unsaturated reactant selected from a group consisting of (i) substituted or unsubstituted unsaturated organic compounds, (ii) silicon compounds comprising substituted or unsubstituted unsaturated organic substituents, and (iii) mixtures of (i) and (ii). For this invention, "unsaturated" means that the compound contains at least one unsaturated bond. Substituted as used herein means that at least a portion of the unsaturated reactant has been replaced by halogen atom or alkoxy group.

More specific examples of unsaturated reactants useful in our claimed method include unsubstituted cycloalkene compounds comprising at least 4 carbon atoms; substituted cycloalkene compounds comprising at least 4 carbon atoms; linear alkene compounds comprising 2 to 30 carbon atoms; branched alkene compounds comprising 4 to 30 carbon atoms; alkyne compounds comprising 2 to 30 carbon atoms, and mixtures of any of the above.

The substituted and unsubstitued cycloalkene compounds of the present method are those containing one or more unsaturated bonds in the ring. The unsubstituted cycloalkene compounds include cyclobutene, cyclopentene, cyclohexene, cycloheptene, cyclooctene, 1,3-cyclohexadiene, 1,3,5-cycloheptatriene, 1-methylcyclopentene, 4-phenylcyclohexene and 3-methylcyclopentadiene. The preferred cycloalkene compounds are cyclohexene or cyclopentene, with cyclohexene being most preferred.

Unsaturated reactants of the present method include substituted and unsubstituted organic compounds including alkenes, such as 1-hexene, 1,5-hexadiene, trans-2-hexene, 1-methyl-cyclohexene, 2-methyl-2-butene, 2,3-dimethyl-2-butene, 1,3-butadiene, 4-methyl-1,3-pentadiene, 2-methyl-3-hexene, 3-methyl-3-hexene, 3-ethyl-2,2-dimethyl-3-heptene, 4-methyl-2-hexene, 4-butyl-7-methyl-2-octene, 2,2,5,5-tetramethyl-3-hexene, 2-pentene, 3-hexene, 2-methyl-2-pentene, 2,4,4-trimethyl-2-pentene, 3-methyl-2-pentene, 4-methyl-2-pentene; and aryls, such as styrene or α-methyl-styrene. The unsaturated reactants may also include the alkenes, such as, Cx-C=C-Cy-O-R, wherein x=1-10, y=1-10 and R=C1-10 alkyl group or aryl groups. Our method is especially useful for unsaturated reactants where the unsaturation is in the unsaturated reactant's internal structure.

Unsubstituted alkynes useful in our method are compounds comprising 2 to 30 carbon atoms including, for example, 6-methyl-3-octyne, 2-butyne, 2-hexyne, 3-hexyne, 2-methyl-4-octyne, 5-decyne and 2-pentyne.

The substituent groups on the unsaturated reactants include halogen groups, such as, fluoro, bromo or chloro, particularly fluorc, alkoxy groups, such as, -OR groups on the organic substituents on the silicon hydride molecule, where R=C1 to 10 alkyl or aryl groups.

The mole ratio of the unsaturated reactant to silicon hydride is generally varied within a range of 0.4:1 to 1.6:1. Preferred is when this mole ratio is within a range of 0.8:1 to 1.2:1.

The silicon hydride and unsaturated reactant are contacted in the presence of a borane catalyst selected from amine borane complexes or phosphine borane complexes. The amine borane complexes useful herein are described by formula R² ₃NBH₃, where each R² is independently selected from the group consisting of alkyls comprising 1 to 10 carbon atoms, arylalkyls such as C7 to 20 arylalkyls and aryls such as C6 to 20 aryls. Substituent R² is, for example, an alkyl such as methyl, ethyl, propyl, isopropyl, butyl, tertiary butyl, pentyl and hexyl; an arylalkyl such as alkylphenyl or alkylnaphthyl or an aryl such as phenyl, benzyl, tolyl and naphthyl.

The amine borane complexes are trialkylamine boranes, such as trimethylamine borane, tricyclopentylamine borane, triphenylamine borane, dimethylbenzylamine borane, α-methylbenzyldimethylamine borane and triethylamine borane. Preferred is trimethylamine borane.

The phosphine borane complexes herein are described by formula R² ₃PBH_{3,} where R² is as previously defined. Suitable phosphine borane complexes are trimethylphosphine borane, tributylphosphine borane, triphenylphosphine borane, tri-p-tolylphosphine borane and tri-9-phenanthrylphosphine borane. Preferred is triphenylphosphine borane.

The mole ratio of the unsaturated reactant to borane catalyst is varied within a range of 25:1 to 1000:1. Preferred is a mole ratio of unsaturated reactant to borane catalyst within a range of 50:1 to 100:1.

The temperature at which our method is conducted is generally within a range of -10° to 260°C. It is preferred to conduct our method within a temperature range of 15° to 170°C. The most preferred temperature range is 30° to 150°C.

The following examples are provided to further illustrate or explain the present invention.

### Example 1 (Not of this invention)

Evaluation of the hydrosilation of 2-methyl-2-butene with trichlorosilane without catalyst. A 1:1 molar ratio solution of 2-methyl-2-butene and trichlorosilane was prepared in a glass tube without catalyst. The tube was heat sealed under an argon purge and then heated at 250°C. for one hour. After an hour, the tube was cooled and the contents were analyzed by C¹³ nuclear magnetic resonance spectroscopy (NMR) and by gas chromatography using a thermal conductivity detector (GC-TC). The GC-TC analysis indicated the formation of 2.8 area percent of 2-methyl-3-trichlorosilylbutane under the GC-TC trace.

### Example 2

Evaluation of the hydrosilation of 2-methyl-2-butene with trichlorosilane catalyzed by trimethylamine borane. A 50:50:1 molar ratio solution of 2-methyl-2-butene, trichlorosilane and trimethylamine borane was prepared in a glass tube. The tube was heat sealed under an argon purge and then heated at 250°C. for one hour. After an hour, the tube was cooled and the contents were analyzed by NMR and GC-TC. The GC-TC analysis indicated the formation of 31 area percent of 2-methyl-3-trichlorosilylbutane.

### Example 3 (Not of this invention)

Evaluation of the hydrosilation of 1-methylcyclohexene with trichlorosilane without catalyst. A 1:1.26 molar ratio solution of 1-methylcyclohexene and HSiCl₃ was prepared in a glass tube. The tube was heat sealed under an argon purge and then heated at 250°C. for one hour. After an hour, the tube was cooled and the contents were analyzed by GC-TC. The analysis indicated the formation of 5 area percent of 1-methyl-2-trichlorosilyl-cyclohexane.

### Example 4

Evaluation of the hydrosilation of 1-methylcyclohexene with trichlorosilane catalyzed by trimethylamine borane. To a glass tube containing 12 g of the same solution of Example 3 was added 0.066 g of trimethylamine borane. The tube was heat sealed under an argon purge and then heated at 250°C. for one hour. After an hour, the tube was cooled and the contents were analyzed by GC-TC. The analysis indicated the formation of 70 area percent of 1-methyl-2-trichlorosilylcyclohexane.

### Example 5

Evaluation of the hydrosilation of 1-methylcyclohexene with trichlorosilane catalyzed by triphenylphosphine borane. A 150:210:150:1 molar ratio solution of 1-methylcyclohexene, trichlorosilane, benzene as a solvent and triphenylphosphine borane was prepared in a glass tube. The tube was heat sealed under an argon purge and then heated at 210°C. for four hours. After four hours, the tube was cooled and the contents were analyzed by GC-TC and NMR. The analysis indicated the formation of 54 area percent of 1-methyl-2-trichlorosilylcyclohexane without any remaining 1-methylcyclohexene.

### Example 6

Evaluation of the hydrosilation of 2,3-dimethyl-2-butene with trichlorosilane catalyzed by trimethylamine borane. A 100:100:1 molar ratio solution of 2,3-dimethyl-2-butene, trichlorosilane and trimethylamine borane was prepared in a glass tube. The tube was heat sealed under an argon purge and then heated at 190°C. for four hours. After four hours, the tube was cooled and the contents were analyzed by GC-TC. The analysis indicated the formation of 22 area percent of trichlorosilane, 21 area percent of 2,3-dimethyl-2-butene and 47 area percent of 2,3-dimethyl-2-trichlorosily-butane. After 18 hours at 190°C., there was 5 area percent of trichlorosilane, 3 area percent of 2,3-dimethyl-2-butene and 76 area percent of 2,3-dimethyl-2-trichlorosilybutane.

### Example 7

Evaluation of the hydrosilation of 2,3-dimethyl-2-butene with methyldichlorosilane catalyzed by trimethylamine borane. A 100:20:1 molar ratio solution of 2,3-dimethyl-2-butene, methyldichlorosilane and trimethylamine borane was prepared in a glass tube. The tube was heat sealed under an argon purge and then heated at 250°C. for 0.5 hour. After 0.5 hour, the tube was cooled and the contents were analyzed by GC-TC. The analysis indicated the formation of 10 area percent of 2-methyl-3-methyldichlorosilylbutane. After 2 hours at 250°C., the analysis indicated the formation of 16 area percent of 2-methyl-3-methyldichlorosilylbutane. After 18 hours at 230°C., the analysis indicated the formation of 19 area percent of 2-methyl-3-methyldichlorosilylbutane.

## Claims

1. A hydrosilation method which comprises contacting
(A) a silicon hydride described by formula R¹ ₐH_{b}SiX_{4-a-b} where each R¹ is independently selected from alkyls comprising 1 to 20 carbon atoms, cycloalkyls comprising 4 to 12 carbon atoms and aryls; X is a halogen atom, a=0 to 3, and a + b=1 to 4; and
(B) an unsaturated reactant selected from the group consisting of
(i) substituted or unsubstituted unsaturated organic compounds,
(ii) silicon compounds comprising substituted or unsubstituted unsaturated organic substituents, and
(iii) mixtures of (i) and (ii); in the presence of a catalyst selected from the group consisting of amine borane complexes described by formula R² ₃NBH₃ or phosphine borane complexes described by formula R² ₃PBH_{3,} where each R² is independently selected from the group consisting of alkyls comprising 1 to 10 carbon atoms, arylalkyls and aryls.

2. A method according to claim 1, where the unsaturated reactant (B) has an internal unsaturated bond.

3. A method according to claim 1 or claim 2 wherein the mole ratio of the unsaturated reactant to the silicon hydride is within a range of 0.4:1 to 1.6:1.

4. A method according to claim 1 or claim 2 wherein the mole ratio of the unsaturated reactant to the borane catalyst is within a range of 25:1 to 1000:1.

5. A method according to any of claims 1 to 4 wherein contact of the silicon hydride with the unsaturated reactant is effected at a temperature within a range of -10°C. to 260°C.
